# EUROPÄISCHE PATENTSCHRIFT

(11) **EP 1 336 553 B1**
(45) Veröffentlichungstag und Bekanntmachung des Hinweises auf die Patenterteilung: **16.03.2005**
(21) Anmeldenummer: 02028923.7
(22) Anmeldetag: 23.12.2002
(51) Int. Cl.: B62D 65/00, B65G 54/02

(54) **Fördereinrichtung zum Fördern von Fahrzeugkarosserien**
Transport device for transporting vehicle bodies
Disposition de transport pour le transport de carrosseries de véhicule

(30) Priorität: 14.02.2002 DE 10205991
(43) Veröffentlichungstag der Anmeldung: 20.08.2003
(73) Patentinhaber: EISENMANN Maschinenbau GmbH & Co. KG, 71032 Böblingen (DE)
(72) Erfinder: Swoboda, Werner, 71032 Böblingen (DE)
(74) Vertreter: Ostertag, Ulrich, Dr.

(56) Entgegenhaltungen:
- EP-A- 0 400 663
- US-A- 4 894 909
- US-A- 5 668 421
- PATENT ABSTRACTS OF JAPAN vol. 1995, no. 11, 26. Dezember 1995 (1995-12-26) -& JP 07 231515 A (HIROYUKI MIZUKAMI;OTHERS: 01), 29. August 1995 (1995-08-29)
- PATENT ABSTRACTS OF JAPAN vol. 2000, no. 05, 14. September 2000 (2000-09-14) -& JP 2000 043769 A (TRINITY IND CORP), 15. Februar 2000 (2000-02-15)
- PATENT ABSTRACTS OF JAPAN vol. 013, no. 360 (M-858), 11. August 1989 (1989-08-11) -& JP 01 119488 A (MAZDA MOTOR CORP;OTHERS: 01), 11. Mai 1989 (1989-05-11)
- PATENT ABSTRACTS OF JAPAN vol. 015, no. 222 (M-1121), 6. Juni 1991 (1991-06-06) -& JP 03 066531 A (NISSAN MOTOR CO LTD), 22. März 1991 (1991-03-22)

## Beschreibung

Die Erfindung betrifft eine Fördereinrichtung zum Fördern von Fahrzeugkarosserien nach dem Oberbegriff des Anspruchs 1,
sowie eine Verwendung einer solchen.

Fördereinrichtungen zum Fördern von Fahrzeugkarosserien weisen Trageinrichtungen für die zu befördernden Fahrzeugkarosserien auf. Im Automobilbau werden Fahrzeugkarosserien auf diesen Trageinrichtungen in der Regel mittels Rollenbahnen und/oder Tragkettenförderern durch Rohbau, Lackiererei und zum Teil auch durch die Endmontage transportiert. Die Rollenbahnen werden über Getriebemotoren und/oder Ketten bzw. Zahnriementriebe angetrieben, sie bestehen somit aus Komponenten, die einem Verschleiß unterliegen und teilweise auch gewartet werden müssen.

Dies gilt verstärkt auch für die Tragkettenförderer. Hier ist zusätzlich eine Schmierung der Ketten notwendig, was sowohl bei der Inbetriebnahme, bei der Einstellung der Schmierzyklen als auch bei der Wartung zu erhöhtem Aufwand führt. Der Abrieb der Kettenführungsleisten und die Verschmutzung der Förderer durch die Schmiermittel stellen eine Problematik dar, die insbesondere auch in den Prozessbereichen das Prozessergebnis, z. B. also die Qualität der Oberflächenbeschichtung der Fahrzeugkarosserien, negativ durch Schmutzpartikel, Fett, Ölmoleküle in der Umgebungsluft usw. beeinflusst.

Solche Fördereinrichtungen haben weiter den Nachteil, daß dort, wo sie durch in Kabinen angeordnete Behandlungsstationen laufen, Wellen durch die Kabinenwände hindurch geführt werden müssen. Außerdem sind zwischen den beiden Bahnen, auf denen sich die Trageinrichtungen abstützen, querverlaufende, durchgehende Wellen als Kraftverbindungsglieder erforderlich. Bei Rollenbahnen wird für jedes Rollenpaar eine derartige Welle, bei Tragkettenförderern für jedes antreibenden Zahnradpaar eine Welle benötigt. Daher liegen innerhalb der Fördereinrichtung keine durchgehende Freiräume vor, die für Kanäle oder Begehungen benutzt werden könnten. Zudem sind zur Aufnahme von Längenänderungen, die auf Temperaturveränderungen zurückgehen, aufwendige Spannstationen erforderlich, die ebenso wie die Antriebsstationen einen erheblichen Platzbedarf haben.

Eine Fördereinrichtung der eingangs genannten Art ist aus der EP 0 400 663 A1 bekannt. Hier werden Fahrzeugkarosserien auf als massive Platten ausgestalteten Paletten befestigt, welche von Rollenförderern getragen sind. Zur Beförderung der Paletten werden Linearmotoren verwendet. Entlang dem Weg der Rollenförderer sind im Boden Statorreihen mit den Primärteilen des Linearantriebs angeordnet; die Sekundärteile sitzen federnd unter den Paletten.
Dabei ist der Abstand zwischen den Primärteilen relativ gering, so daß ein Sekundärteil stets mindestens ein Primärteil in unmittelbarer Nachbarschaft vorfindet.

Durch die Verwendung eines Linearantriebes sind die Verhältnisse hinsichtlich Wartung und Verschmutzungsgefahr erheblich günstiger als bei den eingangs erwähnten Antriebsarten. Jedoch sind die massiven Paletten recht schwer, so daß die Antriebsleistung unerwünscht hoch sein muß; andererseits behindern sie die Zugänglichkeit der beförderten Fahrzeugkarosserien von unten her. Ein weiterer Nachteil ist in der federnden Lagerung der Sekundärteile unter den Paletten zu sehen, weil die hierzu vorgesehene Einrichtung einerseits verschmutzungsgefährdet ist und Störungen - besonders bei Anlagenteilen mit "rauhem" Betrieb - ausgesetzt ist, und andererseits von ihr selbst auch eine gewisse Verschmutzungsgefahr ausgehen kann.

Aufgabe der vorliegenden Erfindung ist es, eine Fördereinrichtung der eingangs genannten Art derart auszugestalten, daß die insgesamt zu transportierenden Massen reduziert werden, die Trageinrichtungen bessere Zugänglichkeit zu den zu transportierenden Fahrzeugkarosserien gewähren und die Verschmutzungsgefahr weiter reduziert wird.

Diese Aufgabe wird erfindungsgemäß mit den Mitteln des Anspruchs 1 gelöst.

Aufgrund der erfindungsgemäßen Ausbildung der Trageinrichtung als Skid wird die insgesamt zu bewegende Masse reduziert. Zugleich wird die transportierte Fahrzeugkarosserie von unten her besser zugänglich. Durch die Ausbildung der Primärteile derart, daß sie federnd in Richtung auf das Sekundärteil des gerade benachbarten Skids gedrückt werden, kann die Zahl beweglicher Komponeten am Skid noch weiter herabgesetzt werden. Dies hat insbesondere in Anlagenteilen Vorteile, wo die Umgebungsbedingungen besonders rauh sind, beispielsweise hohe Temperaturen herrschen und/oder Farbnebel vorliegen.

Bei insgesamt geringerer zu handhabender Masse wird nicht nur der Energieaufwand günstig beeinflusst, sondern auch die Steuerbarkeit der Skids wird verbessert, was sowohl für die individuelle Steuerung einzelner Skids im Sinne kontinuierlicher oder taktender Fahrweise zutrifft, als auch dann, wenn mehrere Skids "im Pulk" mit gemeinsamer, gleicher Geschwindigkeit und bestimmten, feststehenden Abständen gefahren werden.

Die Federeinrichtung, mit welcher das Primärteil gegen das Sekundärteil des gerade benachbarten Skids gedrückt wird, stellt sicher, daß zwischen den wechselwirkenden Primär- und Sekundärteilen des Linearantriebs nur ein kleiner Spalt vorliegt, da bei größeren Spalten der Wirkungsgrad des Linearantriebs rasch abfällt. Primär- und Sekundärteile sollten aber auch nicht direkt aneinander anliegen. Deshalb ist eine Ausführungsform besonders empfehlenswert, bei welcher jedes Primärteil eine Einrichtung aufweist, welche einen konstanten, kleinen Spalt zwischen den benachbarten Flächen des Primärteiles und des jeweils benachbarten Sekundärteiles gewährleistet.

Eine hierfür in Frage kommende Einrichtung umfasst mindestens eine Distanzrolle, die an dem Primärteil gelagert ist und an einem mit dem Skid verbundenen Teil, vorzugsweise dem Sekundärteil, abrollt. Das Primärteil wird also mit Hilfe der Federeinrichtung in Richtung auf das Sekundärteil so weit gedrückt, bis die Distanzrolle an dem mit dem Skid verbundenen Teil anstößt.

Im einfachsten Fall kann der Linearantrieb zwischen den beiden Bahnen, auf denen sich die beiden Skidkufen abstützen, angeordnet sein. Dann kann der Skid eine vollständig herkömmliche Bauweise besitzen; er wird dadurch zum Einsatz in der erfindungsgemäßen Fördereinrichtung bereit gemacht, daß an seiner Unterseite ein Sekundärteil angebracht wird.

Besonders bevorzugt wird jedoch diejenige Ausführungsform der Erfindung, bei welcher der Linearantrieb im Bereich mindestens einer der beiden Bahnen angeordnet ist, auf denen sich die Skidkufen abstützen, und bei welcher hierzu das Sekundärteil des mindestens einen Skids an mindestens einer der beiden Skidkufen angeordnet ist. Auf diese Weise entsteht eine Fördereinrichtung, bei welcher zwischen den beiden Bahnen keinerlei Querverbindung erforderlich ist. Hier entstehen also Freiräume, die zur Führung von Kanälen oder Begehungen genutzt werden können.

Die für diese Ausführungsform eingesetzten Skids unterscheiden sich zwar in ihrer Bauweise von herkömmlichen Skids; sie sind aber gleichwohl außerhalb der erfindungsgemäßen Fördereinrichtung gegen herkömmliche Skids voll austauschbar, so daß sie überall deren Funktion übernehmen können.

Die Primärteile können dabei in eine der beiden Bahnen integriert sein.

Die Primärteile und das mindestens eine Sekundärteil können in diesem Falle als komplementäre, benachbart zueinander verlaufenden Profile gestaltet sein. Auf diese Weise wird einerseits eine gewisse Führungswirkung des Skids erzielt, die über die profilierten Primär- und Sekundärteile vermittelt wird, und andererseits eine verhältnismäßig große Wechselwirkungsfläche zwischen den Primärteilen und den Sekundärteilen bereitgestellt.

Konstruktiv einfacher ist es, wenn die einander zugewandten Flächen der Primärteile und des mindestens einen Sekundärteils eben sind. Bei dieser Ausführungsform muß die seitliche Führung des Skids auf den Bahnen in anderer Weise gewährleistet sein; außerdem ist, da möglicherweise die wechselwirkenden Flächen nicht so groß sind, eine etwas stärkere Bestromung der Primärteile erforderlich.

Eine sehr günstige Asugestaltung der Erfindung zeichnet sich dadurch aus, daß das Sekundärteil des mindestens einen Skids an einer Seitenfläche der Skidkufe angeordnet ist und die Primärteile seitlich an dem Sekundärteil abrollen. Ein solcher Linearantrieb wird von den Proportionen her höher und weist kleinere Wicklungsverluste auf.

Bei einer in der Praxis robusten Ausführungsform der Erfindung sind die Bahnen, auf denen sich die Skidkufen abstützen, Rollenleisten, die jeweils eine Vielzahl von sich frei drehenden Tragrollen aufweisen. Diese Rollenleisten unterscheiden sich also von den herkömmlichen, als Skidfördereinrichtungen eingesetzten Rollenbahnen dadurch, daß die Tragrollen nicht angetrieben und gegenüberliegende Tragrollen auch nicht durch Wellen miteinander verbunden sind.

Die Abstände zwischen den Tragrollen sollten dabei so auf die Länge der Skidkufen abgestimmt sein, daß jede Skidkufe zu jeder Zeit in Berührung mit mindestens drei Tragrollen ist.

Dabei kann vorteilhaft sein, wenn die Primärteile in die Rollenleiste zwischen den Tragrollen integriert sind. Auf diese Weise entstehen Rollenleisten, die als kompakte, integrierte Einheit fabrikmäßig vormontiert werden können und so an der Baustelle nur noch befestigt zu werden brauchen.

Mit einem etwas größeren Aufwand ist es auch möglich, daß sich die Skidkufen berührungslos an den Bahnen abstützen. In diesem Falle bestitzt die erfindungsgemäße Fördereinrichtung praktisch keine beweglichen Elemente mehr; Verschleiß und Verschmutzungsgefahr sind vernachlässigbar.

Die Skidkufen können sich hierzu über ein Luftpolster und/oder ein Magnetfeld an den Bahnen abstützen.

Die Vorzüge des erfindungsgemäßen Fördersystemes kommen besonders bei dessen Verwendung zum Transport von Gegenständen durch einen Trockner zum Tragen. Gerade in Trocknern ist es besonders wichtig, möglichst wenige störende Stoffe, insbesondere die Oberflächenbenetzung störende Stoffe, einzubringen. Das Eintragen von Schmierstoffen und Drecknester sind unbedingt zu vermeiden, was mit den erfindungsgemäßen Fördereinrichtungen besonders gut gelingt. Da die erfindungsgemäßen Fördereinrichtungen die Zirkulation der Heißluft im Trockner praktisch nicht behindern, sind die zu trocknenden Fahrzeugkarosserien für die Trocknerluft besonders gut zugänglich. Allgemein ist die Luftzirkulation durch den Trockner bei Einsatz der erfindungsgemäßen Fördereinrichtungen besser als dies beim Stande der Technik der Fall war. Da die Primärteile des Linearantriebs im Trockner der Trocknerhitze ausgesetzt sind, empfiehlt es sich, diese gesondert zu kühlen.

Ausführungsbeispiele der Erfindung werden nachfolgend anhand der Zeichnung näher erläutert; es zeigen
- Figur 1: die Seitenansicht eines Ausschnitts eines ersten Ausführungsbeispiels eines Skidfördersystems;
- Figur 2: eine Ausschnittvergrößerung aus Figur 1;
- Figur 3: einen Schnitt gemäß Linie III-III von Figur 2;
- Figur 4: eine Ansicht, ähnlich der Figur 2, jedoch eines zweiten Ausführungsbeispieles eines Skidfördersystemes;
- Figur 5: einen Schnitt gemäß Linie V-V von Figur 4;
- Figur 6: eine Ansicht ähnlich den Figuren 3 und 4, jedoch eines dritten Ausführungsbeispieles eines Skidfördersystemes;
- Figur 7: einen Schnitt gemäß Linie VII-VII von Figur 6;
- Figur 8: einen Schnitt, ähnlich den Figuren 3, 5 und 7 durch ein viertes Ausführungsbeispiel eines Skidfördersystems;
- Figur 9: einen Vertikalschnitt durch einen Trockner mit einer erfindungsgemäßen Fördereinrichtung;
- Figur 10: einen Schnitt durch den Trockner von Figur 9 senkrecht zur Bewegungsrichtung der Fördereinrichtung;
- Figur 11: eine Detailvergrößerung aus Figur 10.

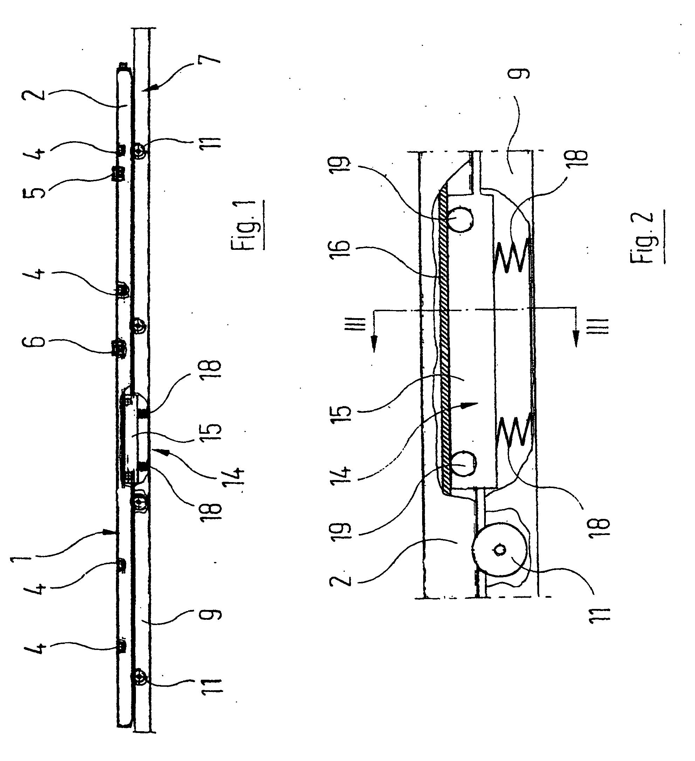

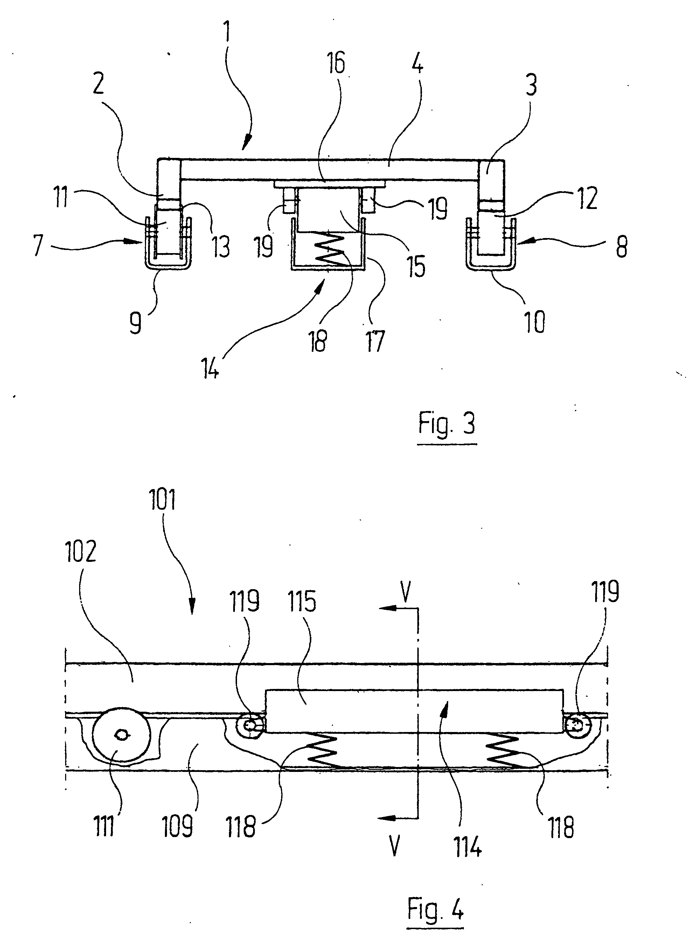

In den Figuren 1 bis 3 ist mit dem Bezugszeichen 1 ein Skid bezeichnet, der in seiner grundsätzlichen Bauweise dem Herkömmlichen entspricht. D. h., der Skid 1 umfasst zwei parallele Skidkufen 2, 3, (vgl. insbesondere auch Figur 3), die durch Quertraversen 4 miteinander verbunden sind. Die Skidkufen 2, 3 tragen Befestigungsmittel 5, 6 (vgl. Figur 1), an denen ein zu transportierendes Werkstück, beispielsweise eine Fahrzeugkarosserie, befestigt werden kann.

Der Skid 1 stützt sich an zwei Rollenleisten 7, 8 ab, welche den Skid 1 auch führen. Die Rollenleisten 7, 8 ihrerseits sind auf einer Tragstruktur, beispielsweise auf einem Stahlbau oder auf dem Boden des Raumes, parallel zueinander in einem Abstand montiert, der dem Abstand der beiden Skidkufen 2, 3 entspricht. Jede Rollenleiste 7,8 besitzt ein U-förmiges Profil 9, 10, welches an der Tragstruktur angebracht ist und in dem in der dargestellten Weise in regelmäßigen Abständen Tragrollen 11, 12 frei drehbar montiert sind. Die Skidkufen 2, 3 des Skids 1 liegen dabei auf den Mantelflächen der Tragrollen 11, 12 auf, wobei die Tragrollen 11 einer der beiden Rollenleisten, nämlich der in Figur 3 linken Rollenleiste 7, mit überstehenden Spurkränzen 13 versehen sind, welche für eine seitliche Führung des Skids 1 sorgen. Die Tragrollen 12 der gegenüberliegenden, in Figur 3 rechten Rollenleiste 8 tragen keine derartigen Spurkränze, so daß hier eine gewisse seitliche Auswanderung der Skidkufe 3 gegenüber den Tragrollen 12 möglich ist. Dies verringert die Genauigkeitsanforderungen an die Verlegung der Rollenleisten 7, 8.

Die Tragrollen 11, 12 haben in ihren jeweiligen Rollenleisten 7, 8 einen solchen Abstand voneinander, daß jede Skidkufe 2, 3 auf mindestens drei, im dargestellten Ausführungsbeispiel auf vier Tragrollen 11, 12 aufliegt. Die Tragrollen 11, 12 in den Spurleisten 7, 8 sind, wie bereits erwähnt, frei drehbar, werden also insbesondere nicht durch eine äußere Antriebswelle angetrieben. Als Antrieb für den Skid 1 dient vielmehr ein Linearantrieb, der insgesamt mit dem Bezugszeichen 14 versehen ist. Der Linearantrieb 14 umfasst eine Vielzahl stationär montierter Primärteile 15, die in Abständen entlang des Bewegungsweges der Skids 1 in der Mitte zwischen den Rollenleisten 7, 8 auf der Tragstruktur montiert sind. Die Abstände zwischen den Primärteilen 15, die in geeigneter Weise bestromt werden können, übersteigen dabei die Länge der Skidkufen 2, 3 der Skids 1 nicht, so daß jeder Skid 1, der sich auf den Rollenleisten 7, 8 bewegt, stets in der Nachbarschaft mindestens eines Primärteiles 15 ist.

An der Unterseite des Skids 1 ist, mittig zwischen den Skidkufen 2, 3 ein Sekundärteil 16 des Linearantriebs 14 fest montiert, welches mit dem Primärteil 15 zusammenwirkt. Zwischen dem Sekundärteil 16 und dem Primärteil 15 wird ein konstanter Arbeitsspalt von etwa einem Millimeter auf folgende Weise eingehalten:

Alle Primärteile 15 des Linearantriebs 14 sind in U-Profilen 17, die ihrerseits auf der Tragstruktur befestigt sind, vertikal beweglich geführt. Zwei zwischen der Basis des U-förmigen Profils 17 und der Unterseite des Primärteils 15 verspannte Druckfedern 18 suchen, das Primärteil 15 nach oben gegen das mit dem Skid 1 verbundene Sekundärteil 16 zu drücken. Der gewünschte, konstante Spalt zwischen dem Primärteil 15 und dem Sekundärteil 16 wird durch insgesamt vier Distanzrollen 19 eingehalten, die paarweise an gegenüberliegenden Seitenflächen des Primärteiles 15 in entsprechendem Abstand von dessen Oberseite drehbar gelagert sind und auf der Unterseite des Sekundärteiles 16 abrollen.

Der Linearantrieb 14 kann beispielsweise nach Art eines Asynchronmotors, eines Reluktanzmotors oder eines Synchronmotors ausgebildet sein.

Die Funktionsweise der oben beschriebenen Skidfördereinrichtung ist wie folgt:

Die einzelnen Skids 1 liegen lose unter ihrem Eigengewicht sowie dem Gewicht der transportierten Fahrzeugkarosserie auf den Tragrollen 11, 12 der beiden Rollenleisten 7, 8 auf. Sollen sie bewegt werden, werden die jeweils unter dem jeweiligen Skid 1 befindlichen Primärteile 15 des Linearantriebes 14 bestromt. Die sich zwischen dem Primärteil 15 und dem Sekundärteil 16 des Skids 1 entwickelnden Kräfte setzen den Skid 1 längs der Rollenleisten 7, 8 in Bewegung.

Grundsätzlich kann auf diese Weise jeder Skid 1, der sich auf den Rollenleisten 7, 8 befindet, individuell bewegt werden, wobei sowohl eine kontinuierliche als auch eine taktende Fahrweise der einzelnen Skids 1 möglich ist. Die Skids 1 werden mit Hilfe des dargestellten Fördersystemes entlang der gesamten Montagestrecke bewegt, auch durch die Innenbereiche von Behandlungskabinen wie Trocknerkabinen, Lackierkabinen oder sonstige verfahrenstechnische Anlagenbereiche hindurch. Auf längeren Förderstrecken bzw. innerhalb von Kabinen werden mehrere Skids 1 vorzugsweise "im Pulk", d. h. mit konstanter, gleicher Geschwindigkeit und in bestimmten Abständen gefahren.

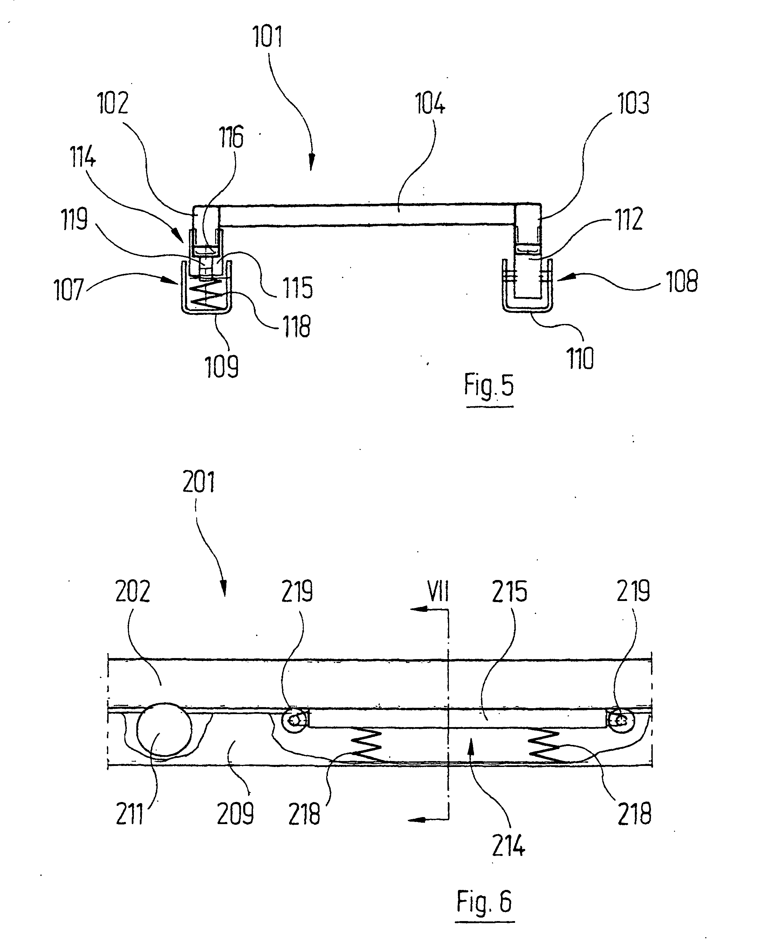

Die Figuren 4 und 5 zeigen ein zweites Ausführungsbeispiel einer Skidfördereinrichtung, die derjenigen sehr ähnlich ist, die oben anhand der Figuren 1 bis 3 beschrieben wurde. Entsprechende Teile sind daher mit demselben Bezugszeichen zuzüglich 100 gekennzeichnet.

Die Bauweise des Skids 101 der Figuren 4 und 5 stimmt insoweit mit derjenigen des Skids 1 der Figuren 1 bis 3 überein, als auch er zwei parallele Skidkufen 102, 103 aufweist, die über Quertraversen 104 miteinander verbunden sind und geeignete Befestigungsmittel zur Befestigung einer Fahrzeugkarosserie aufweisen. Die Skidkufen 102, 103 werden wiederum auf Rollenleisten 107, 108 getragen und geführt, die parallel zueinander im Abstand der Skidkufen 102, 103 entlang des Förderweges verlaufen. Jede der Rollenleisten 107, 108 umfasst eine Vielzahl von in entsprechenden Abständen angeordneten, frei drehbaren und nicht angetriebenen Tragrollen 111, 112, auf welchen die Unterseiten der Skidkufen 102, 103 aufliegen.

Im Gegensatz zum Ausführungsbeispiel der Figuren 1 bis 3 ist der Linearantrieb 114, der für die Vorwärtsbewegung der Skids 101 sorgt, nicht mittig zwischen den Rollenleisten 107, 108 bzw. mittig zwischen den Skidkufen 102, 103 sondern an einer Seite der Fördereinrichtung in folgender Weise angeordnet:

Die verschiedenen Primärteile 115 des Linearantriebes 114 sind in die in Figur 5 linke Rollenleiste 107 integriert, indem sie, untereinander wieder in den entsprechenden Abständen, zwischen benachbarte Tragrollen 111 dieser Rollenleiste 107 eingesetzt sind. Die Primärteile 115 sind im oberen Bereich, wie der Figur 5 zu entnehmen ist, in Form eines nach oben offenen U profiliert und werden von jeweils zwei Druckfedern 118, die zwischen der Basis des U-förmigen Profiles 109 der Rollenleiste 107 und der Unterseite jedes Primärteiles 115 verspannt sind, nach oben gedrückt. Das Sekundärteil 116 des Linearantriebes 114 erstreckt sich im wesentlichen über die gesamte Länge des Skids 101 und ist als U-förmiges Profil in den unteren Bereich der in Figur 5 linken, der Rollenleiste 107 benachbarten Skidkufe 102 integriert. Das Primärteil 115 des Linearantriebs 114 umgibt dabei mit einem kleinen Spalt, der beispielsweise wiederum 1 mm betragen kann, das Sekundärteil 116 in der Skidkufe 102.

Um zwischen der Unterseite des in der Skidkufe 102 befestigten Sekundärteiles 116 und der Basis des U-Profiles in den Primärteilen 115 den gewünschten konstanten Spalt einzuhalten, sind wiederum Distanzrollen 119 vorgesehen. Diese Distanzrollen 119 sind, wie insbesondere der Figur 4 zu entnehmen ist, an Auslegern 120, 121 montiert, die an den beiden Stirnseiten jedes Primärteiles 115 angebracht sind und die Distanzrollen 119 dem Primärteil 115 voraus- bzw. nachlaufend in der richtigen Höhe lagern.

Die Funktionsweise des zweiten, in den Figuren 4 und 5 dargestellten Skidfördersystemes stimmt vollständig mit demjenigen des Ausführungspieles der Figuren 1 bis 3 überein. Vorteil der Ausführungsform der Figuren 4 und 5 ist jedoch, daß der Zwischenraum zwischen den beiden Rollenleisten 107, 108 vollständig frei ist. Hier liegen somit Freiräume vor, in denen Kanäle untergebracht werden oder Begehungen stattfinden können.

Die Rollenleisten 107, 108 sind kompakte, in sich geschlossene Einheiten, die vollständig innerhalb des Werkes vormontiert und so auf die Baustelle verbracht und dort an der Tragstruktur befestigt weden können.

Die Primärteile 115 können statt des dargestellten U-Profiles auch ein L-Profil aufweisen, d. h., die benachbarte Skidkufe 102 nur von zwei Seiten her umschließen, was die Anforderungen an die Montagegenauigkeit reduziert.

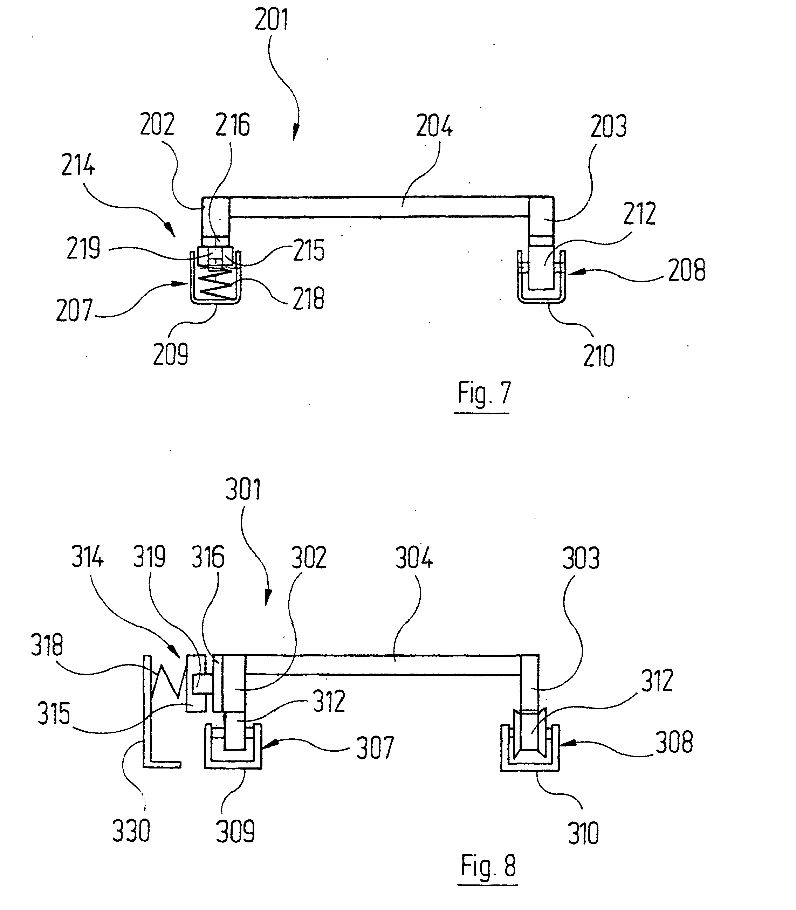

Die Figuren 6 und 7 zeigen ein drittes Ausführungsbeispiel eines Skidfördersystemes mit Linearantrieb, welches demjenigen der Figuren 4 und 5 sehr ähnelt. Entsprechende Teile sind daher mit demselben Bezugszeichen wie dort, jedoch erneut um 100 erhöht, gekennzeichnet.

Auch beim Ausführungsbeispiel der Figuren 6 und 7 ist der Linearantrieb 214 außermittig im Bereich einer der beiden Rollenleisten 207 bzw. einer der beiden Skidufen 202 angeordnet. Die Primärteile 215 des Linearantriebes 214 sind wieder in den entsprechenden Abständen zwischen Tragrollen 211 der in Figur 7 linken Rollenleiste 207 eingefügt. Die Primärteile 215 werden mit Hilfe von Druckfedern 218, die zwischen der Basis des U-Profiles 209 der Rollenleiste 207 und der Unterseite der Primärteile 215 verspannt sind, nach oben gedrückt. Im Gegensatz zum Ausführungsbeispiel der Figuren 4 und 5 sind die Primärteile 215 und die Sekundärteile 216 des Linearantriebes 214 in den Figuren 6 und 7 nicht als U-Profile ausgebildet. Vielmehr besitzen die Primärteile 215 eine flache Oberseite und die an der Skidkufe 202 befestigten Sekundärteile 216 eine flache Unterseite. Zwischen dieser Unterseite der Sekundärteile 216 und der Oberseite der Primärteile 215 wird in einer Weise, die derjenigen des zweiten, in den Figuren 4 und 5 dargestellten Ausführungsbeispieles entspricht, mit Hilfe von Distanzrollen 219 ein konstanter kleiner Spalt eingehalten.

Auch die Funktionsweise des in den Figuren 6 und 7 dargestellten Ausführungsbeispieles stimmt, was die Art des Vorwärtstriebes der Skids 201 und deren mögliche Steuerung angeht, mit derjenigen der zuvor beschriebenen Ausführungsbeispiele überein. Ähnlich wie beim Ausführungsbeispiel der Figuren 4 und 5 steht zwischen den Rollenleisten 207 und 208 ein Freiraum zur Verfügung, der für Kanäle, Begehungen oder dgl. benutzt werden kann. Die Primärteile 215 und Sekundärteile 216 des Ausführungsbeispieles der Figuren 6 und 7 sind jedoch etwas einfacher und daher preiswerter gestaltet als beim Ausführungsbeispiel der Figuren 4 und 5.

Alle Ausführungsbeispiele haben den Vorteil, daß das Fördersystem nur vergleichsweise wenige bewegliche Teile, insbesondere keine beweglichen, fremdkraftgetriebenen Teile aufweist, die einer Wartung, beispielsweise einer Schmierung bedürfen.

Das in Figur 8 dargestellte vierte Ausführungsbeispiel einer Skidfördereinrichtung ähnelt wiederum sehr stark den oben beschriebenen. Entsprechende Teile sind daher wieder mit demselben Bezugszeichen, jedoch erneut um 100 erhöht gekennzeichnet.

Dieses Ausführungsbeispiel unterscheidet sich von demjenigen der Figuren 6 und 7 dadurch, daß das Sekundärteil 316 des Skids 301 nicht an der Unterseite sondern an der äußeren Seitenfläche der in Figur 8 linken Skidkufe 302 angebracht ist. Entsprechend rollen die Primärteile 315 über Distanzrollen 319 an der in Figur 8 linken Seitenfläche des Sekundärteils 316 ab, gegen die sie durch Druckfedern 318 angedrückt werden. Die Druckfedern 318 stützen sich dabei an einer Profilleiste 330 ab, welche entlang der in Figur 8 linken Rollenleiste 307 geführt ist. Diese Profilleiste 330 führt auch in einer in der Zeichnung nicht dargestellten Weise die Primärteile 315.

Der Vorteil dieser Ausführungsform liegt in der höheren, größere Wechselwirkungsflächen bereitstellenden Bauweise des Linearantriebs 314, wodurch Wicklungsverluste reduziert werden. Außerdem ist die Bauweise der Rollenbahn 307 einfacher, da sie die Primärteile 315 nicht zu haltern und zu führen braucht.

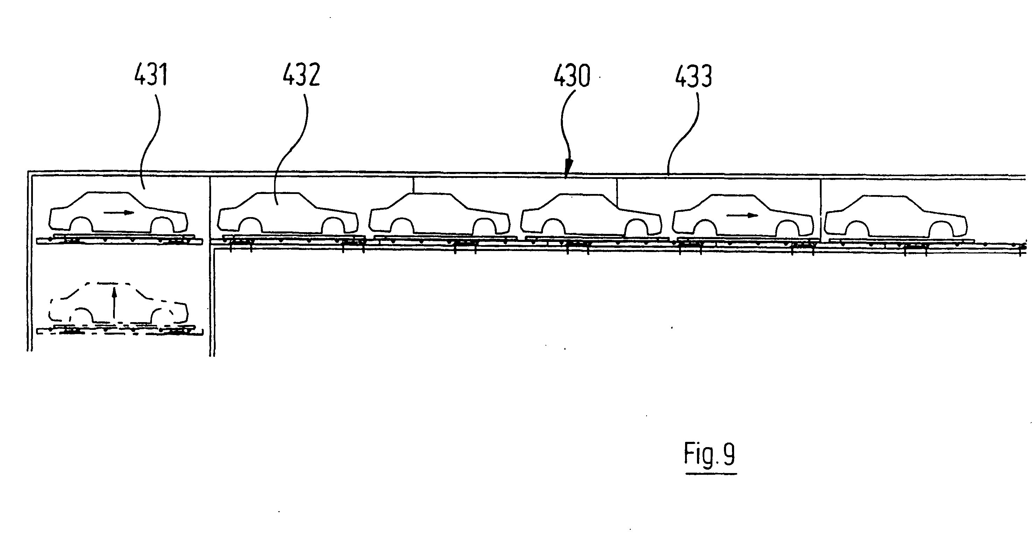

Figur 9 zeigt im Vertikalschnitt einen Trockner, wie er zum Trocknen frisch lackierter Fahrzeugkarosserien 432 eingesetzt wird. Der Trockner umfasst ein Trocknergehäuse 430, in dessen beiden Endbereichen jeweils eine Schleuse 431 vorgesehen ist. In der in Figur 9 dargestellten Schleuse 431 werden die Fahrzeugkarosserien 432 vom Bodenniveau, auf dem sie zugefördert werden, auf ein erhöhtes Niveau angehoben. In einer entsprechenden Schleuse, die in Figur 9 am nicht dargestellten rechten Ende des Trocknergehäuses 430 zu denken ist, werden die Fahrzeugkarosserien 432 wieder auf das Bodenniveau abgesenkt und von dort weiterbefördert.

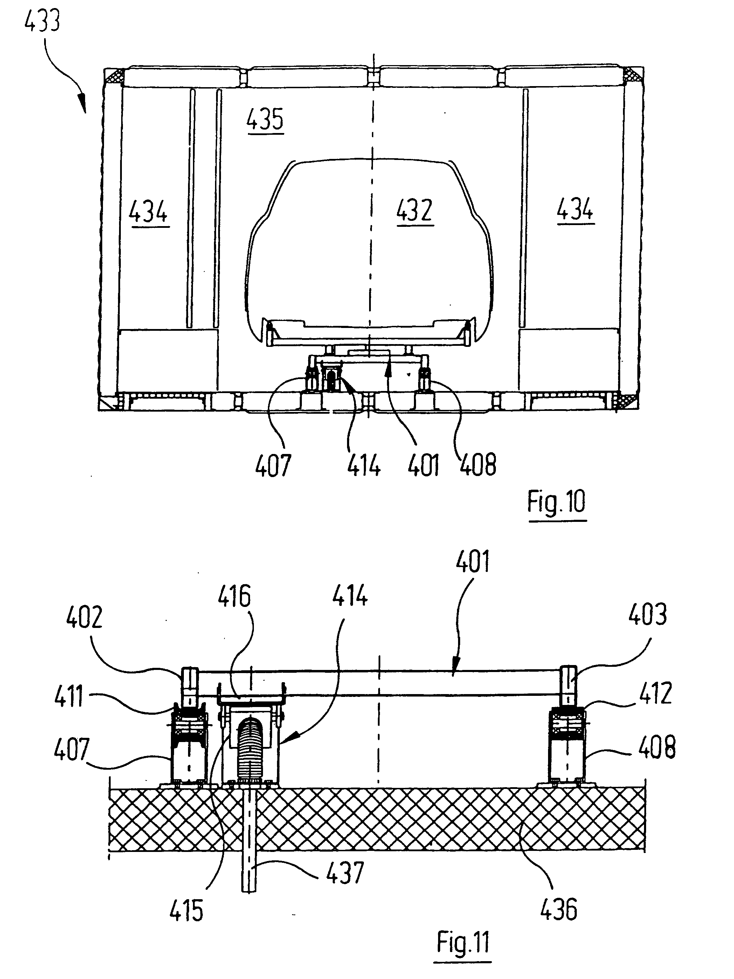

Zwischen den beiden Schleusen'431 erstreckt sich der eigentliche Trocknertunnel 433 in einer gewissen Höhe über dem Bodenniveau. Der Trocknertunnel 433, der in Figur 10 im Schnitt senkrecht zur Bewegungsrichtung der Fahrzeugkarosserien 432 in vergrößertem Maßstab dargestellt ist, enthält seitliche Luftverteilräume 434, in die in nicht dargestellter Weise Heißluft eingebracht werden kann. Diese Heißluft durchsetzt Öffnungen in den Trennwänden 435 zwischen den Luftverteilwänden 434 und dem zwischen diesen liegenden Innenraum 435, in dem sich die Fahrzeugkarosserien 432 bewegen. Die Heißluft beaufschlagt dabei die Fahrzeugkarosserien 432, erwärmt diese und insbesondere die frisch aufgebrachte Lackschicht und bringt diese so zum Trocknen. Die Heißluft wird im unteren Bereich des Innenraumes 435 abgezogen und über ein Heizregister rezirkuliert. Diese Vorgänge sind an und für sich bekannt.

Im Innenraum 435 des Trocknertunnels 433 kommt ein Fördersystem zum Einsatz, wie es oben anhand der Figuren 1 bis 8 beschrieben wurde. Das konkret in den Figuren 10 und 11 dargestellte Fördersystem besitzt eine große Ähnlichkeit mit demjenigen der Figuren 2 und 3 d. h., auch dieses Fördersystem umfasst zwei parallele Rollenleisten 407, 408, wobei die Tragrollen 411 der linken Rollenleiste 407 mit Spurkränzen versehen sind, die Tragrollen 412 der in Figur rechten Rollenleiste 408 dagegen nicht. Die Skidkufen 402, 403 des Skids 401 liegen auf den Tragrollen 411, 412 der beiden Rollenleisten 407, 408 auf.

Während bei dem Fördersystem der Figuren 2 und 3 der Linearantrieb 14 mittig zwischen den beiden Rollenleisten 7, 8 angeordnet war, ist der Linearantrieb 414 des Ausführungsbeispieles der Figuren 10 und 11 etwas aus der Mitte in Richtung auf die in Figuren 10 und 11 linke Rollenleiste 407 verschoben. Hierdurch wird zwischen den Rollenleisten 407 und 408 etwas mehr zusammenhängender Freiraum gewonnen.

Die Rollenleisten 407, 408 sowie die Primärteile 415 sind auf dem isolierten Boden 436 des Trocknertunnels 433 montiert. Die Sekundärteile 416 sind wieder an der Unterseite der Skids 401 angebracht.

Da sich die Primärteile 415 des Linearantriebs 414 in dem mit Heißluft angefüllten Innenraum 435 des Trocknertunnels 433 befinden, müssen sie gekühlt werden. Ein entsprechendes Kühlmedium, beispielsweise Luft oder Wasser, wird jedem Primärteil 415 durch eine Leitung 437 zugeführt, die durch den isolierten Boden 436 des Trocknertunnels 433 hindurchgeführt ist. Eine entsprechende Leitung führt das Kühlmittel, welches die jeweiligen Primärteile 415 passiert hat, wieder ab.

## Patentansprüche

1. Fördereinrichtung zum Fördern von Fahrzeugkarosserien mit
a) mindestens einer Trageinrichtung für mindestens eine auf der Trageinrichtung zu befördernden Fahrzeugkarosserie;
b) zwei parallelen, sich entlang eines Förderweges erstreckenden Bahnen (7, 8; 107, 108; 207, 208; 307, 308; 407, 408), auf denen sich die Trageinrichtung abstützt;
c) einer Antriebseinrichtung für die Trageinrichtung, mit welcher diese entlang der Bahnen (7, 8; 107, 108; 207, 208; 307, 308; 407, 408) bewegt werden kann und die einen Linearantrieb (14) aufweist, der seinerseits umfasst:
ca) eine Vielzahl von entlang des Förderweges stationär angeordneten, bestrombaren Primärteilen (15) ;
cb) an jeder Trageinrichtung ein mit dem jeweils benachbarten Primärteil (15) wechselwirkendes Sekundärteil (16);
wobei
cc) die Länge des Sekundärteiles (16) in Transportrichtung auf den Abstand zwischen den Primärteilen (15) so abgestimmt ist, daß stets mindestens ein Primärteil (15) in unmittelbarer Nachbarschaft zu dem Sekundärteil (16) angeordnet ist;
**dadurch gekennzeichnet, daß**
d) die Trageinrichtung ein Skid (1; 101; 201; 301) ist, der zwei parallele Skidkufen (2, 3; 102, 103; 202, 203; 302, 303) und eine die Skidkufen (2, 3; 102, 103; 202, 203; 302, 303) miteinander verbindende Tragstruktur (4; 104; 204; 304) für mindestens eine auf dem Skid (1; 101; 201; 301) zu befördernden Fahrzeugkarosserie aufweist;
e) die Skidkufen (2, 3; 102; 103; 202, 203; 302, 303) des Skids (1; 101; 201; 301) sich auf den parallelen Bahnen (7, 8; 107, 108; 207, 208; 307, 308; 407, 408) abstützen, und
f) jedes Primärteil (15; 115; 215; 315) mit Hilfe einer Federeinrichtung (18; 118; 218; 318) in Richtung auf das Sekundärteil des gerade benachbarten Skids (1; 101; 201; 301) gedrückt wird.

2. Fördereinrichtung nach Anspruch 1, **dadurch gekennzeichnet, daß** jedes Primärteil (15; 115; 215; 315) eine Einrichtung (19; 119; 219; 319) aufweist, welche einen konstanten, kleinen Spalt zwischen den benachbarten Flächen des Primärteils (15; 115; 215; 315) und des jeweils benachbarten Sekundärteils (16; 116; 216, 316) gewährleistet.

3. Fördereinrichtung nach Anspruch 2, **dadurch gekennzeichnet, daß** die Einrichtung mindestens eine Distanzrolle (19; 119; 219; 319) umfasst, die an dem Primärteil (15; 115; 215; 315) gelagert ist und an einem mit dem Skid (1; 101; 201; 301) verbundenen Teil (16; 116; 216; 316), vorzugsweise dem Sekundärteil, abrollt.

4. Fördereinrichtung nach einem der vorhergehenden Ansprüche, **dadurch gekennzeichnet, daß** der Linearantrieb (14) zwischen den beiden Bahnen (7, 8), auf denen sich die beiden Skidkufen (2, 3) abstützen, angeordnet ist.

5. Fördereinrichtung nach einem der Ansprüche 1 bis 3, **dadurch gekennzeichnet, daß** der Linearantrieb (114; 214; 314) im Bereich einer (107; 207; 307) der beiden Bahnen (107, 108; 207, 208; 307, 308; 407, 408) angeordnet ist, auf denen sich die Skidkufen (102, 103; 202, 203; 302, 303) abstützen, und daß hierzu das Sekundärteil (116; 216; 316) des mindestens einen Skid (101; 201; 301) an mindestens einer (102; 202; 302) der beiden Skidkufen (102, 103; 202, 203; 302, 303) angeordnet ist.

6. Fördereinrichtung nach Anspruch 5, **dadurch gekennzeichnet, daß** die Primärteile (115; 215) in mindestens eine (107; 207) der beiden Bahnen (107, 108; 207, 208) integriert sind.

7. Fördereinrichtung nach Anspruch 6, **dadurch gekennzeichnet, daß** die Primärteile (115) und das mindestens eine Sekundärteil (116) als komplementäre, benachbart zueinander verlaufenden Profile ausgestaltet sind.

8. Fördereinrichtung nach Anspruch 6, **dadurch gekennzeichnet**, da**ß** die einander zugewandten Flächen der Primärteile (215) und des mindestens einen Sekundärteils (216) eben sind.

9. Fördereinrichtung nach Anspruch 5, **dadurch gekennzeichnet**, **daß** das Sekundärteil (316) des mindestens einen Skids (301) an einer Seitenfläche einer Skidkufe (302) angordnet ist und die Primärteile (315) seitlich an dem Sekundärteil (316) abrollen.

10. Fördereinrichtung nach einem der vorhergehenden Ansprüche, **dadurch gekennzeichnet, daß** die Bahnen (7, 8; 107, 108; 207, 208; 307, 308; 407, 408), auf denen sich die Skidkufen (2, 3; 102, 103; 202, 203; 302, 303) abstützen, Rollenleisten sind, die jeweils eine Vielzahl von sich frei drehenden Tragrollen (11, 12; 111, 112; 211, 212; 311, 312) aufweisen.

11. Fördereinrichtung nach Anspruch 10, **dadurch gekennzeichnet, daß** die Abstände zwischen den Tragrollen (11, 12; 111, 112; 211, 212; 311, 312) so auf die Länge der Skidkufen (2, 3; 102, 103; 202, 203; 302, 303) abgestimmt sind, daß jede Skidkufe (2, 3; 102, 103; 202, 203; 302, 303) zu jeder Zeit in Berührung mit mindestens drei Tragrollen (11, 12; 111, 112; 211, 212; 311, 312) ist.

12. Fördereinrichtung nach Anspruch 10 oder 11, bei Rückbeziehung auf einen der Ansprüche 7 bis 9, **dadurch gekennzeichnet**, da**ß** die Primärteile (115; 215) in die Rollenleiste (107, 108; 207, 208) zwischen den Tragrollen (111, 112; 211, 212) eingesetzt sind.

13. Fördereinrichtung nach einem der Ansprüche 1 bis 9, **dadurch gekennzeichnet, daß** sich die Skidkufe berührungslos an den Bahnen abstützen.

14. Fördereinrichtung nach Anspruch 13, **dadurch gekennzeichnet, daß** sich die Skidkufen über ein Luftpolster an den Bahnen abstützen.

15. Fördereinrichtung nach Anspruch 13, **dadurch gekennzeichnet, daß** sich die Skidkufen über ein Magnetfeld an den Bahnen abstützen.

16. Verwendung einer Fördereinrichtung nach einem der Ansprüche 1 bis 15 zum Transport von Fahrzeugkarosserien durch einen Trockner.

17. Verwendung nach Anspruch 16, bei welcher die Primärteile (415) des Linearantriebs (414) gekühlt sind.

## Claims

1. Conveying device for conveying vehicle bodies comprising
a) at least one supporting device for at least one vehicle body to be conveyed on the supporting device;
b) two parallel tracks (7, 8; 107, 108; 207, 208; 307, 308; 407, 408) which extend along a conveying path and on which the supporting device is supported;
c) a driving device for the supporting device, by means of which the supporting device may be moved along the tracks (7, 8; 107, 108; 207, 208; 307, 308; 407, 408) and which includes a linear drive (14), which in turn comprises:
ca) a plurality of energizable primary parts (15) disposed in a stationary manner along the conveying path;
cb) on each supporting device a secondary part (16), which interacts with the respective adjacent primary part (15);
wherein
cc) the length of the secondary part (16) in conveying direction is adjusted to the distance between the primary parts (15) in such a way that there is always at least one primary part (15) disposed in the immediate vicinity of the secondary part (16),
**characterized in that**
d) the supporting device is a skid (1; 101; 201; 301) which comprises two parallel skid runners (2, 3; 102, 103; 202, 203; 302, 303) and a supporting structure (4; 104; 204; 304) for at least one vehicle body to be conveyed on the skid (1; 101; 201; 301), the supporting structure (4; 104; 204; 304) connecting the skid runners (2, 3; 102, 103; 202, 203; 302, 303);
e) the skid runners (2, 3; 102, 103; 202, 203; 302, 303) of the skid (1; 101; 201; 301) are supported on the parallel tracks (7, 8; 107, 108; 207, 208; 307, 308; 407, 408); and
f) each primary part (15; 115; 215; 315) is pressed in the direction to the secondary part of the respective adjacent skid (1; 101; 201; 301) by means of a spring device (18; 118; 218; 318).

2. Conveying device according to claim 1, **characterized in that** each primary part (15; 115; 215; 315) comprises a device (19; 119; 219; 319), which guarantees a constant, small gap between the adjacent surfaces of the primary part (15; 115; 215; 315) and of the respective adjacent secondary part (16; 116; 216; 316).

3. Conveying device according to claim 2, **characterized in that** the device comprises at least one distance roller (19; 119; 219; 319), which is mounted on the primary part (15; 115; 215; 315) and rolls along a part (16; 116; 216; 316) connected to the skid (1; 101; 201; 301), preferably along the secondary part.

4. Conveying device according to one of the preceding claims, **characterized in that** the linear drive (14) is disposed between the two tracks (7, 8), on which the two skid runners (2, 3) are supported.

5. Conveying device according to one of claims 1 to 3, **characterized in that** the linear drive (114; 214; 314) is disposed in the region of one (107; 207; 307) of the two tracks (107, 108; 207, 208; 307, 308), on which the skid runners (102, 103; 202, 203; 302, 303) are supported, and **in that** for said purpose the secondary part (116; 216; 316) of the at least one skid (101; 201; 301) is disposed on at least one (102; 202; 302) of the two skid runners (102, 103; 202, 203; 302, 303).

6. Conveying device according to claim 5, **characterized in that** the primary parts (115; 215) are integrated into at least one (107; 207) of the two tracks (107, 108; 207, 208).

7. Conveying device according to claim 6, **characterized in that** the primary parts (115) and the at least one secondary part (116) are designed as complementary profiles, which extend adjacent to one another.

8. Conveying device according to claim 6, **characterized in that** the mutually opposing surfaces of the primary parts (215) and of the at least one secondary part (216) are flat.

9. Conveying device according to claim 5, **characterized in that** the secondary part (316) of the at least one skid (301) is disposed on a lateral surface of a skid runner (302) and **in that** the primary parts (315) roll laterally along the secondary part (316).

10. Conveying device according to one of the preceding claims, **characterized in that** the tracks (7, 8; 107, 108; 207, 208; 307, 308), on which the skid runners (2, 3; 102, 103; 202, 203; 302, 303) are supported, are roller rails, each of the roller rails comprising a plurality of freely rotating support rollers (11, 12; 111, 112; 211, 212; 311, 312).

11. Conveying device according to claim 10, **characterized in that** the distances between the support rollers (11, 12; 111, 112; 211, 212; 311, 312) are adjusted to the length of the skid runners (2, 3; 102, 103; 202, 203; 302, 303) in such a way that each skid runner (2, 3; 102, 103; 202, 203; 302, 303) is always in contact with at least three support rollers (11, 12; 111, 112; 211, 212; 311, 312)

12. Conveying device according to claim 10 or 11, with relation to one of claims 7 to 9, **characterized in that** the primary parts (115; 215) are inserted into the roller rail (107, 108; 207, 208) between the support rollers (111, 112; 211, 212).

13. Conveying device according to one of claims 1 to 9, **characterized in that** the skid runners are supported on the tracks without contact.

14. Conveying device according to claim 13, **characterized in that** the skid runners are supported on the tracks via an air cushion.

15. Conveying device according to claim 13, **characterized in that** the skid runners are supported on the tracks via a magnetic field.

16. Use of a conveying device according to one of claims 1 to 15 for conveying verhicle bodies through a drier.

17. Use according to claim 16, in which the primary parts (415) of the linear drive (414) are cooled.

## Revendications

1. Dispositif de convoyage pour convoyer des carrosseries de véhicules, avec
a) au moins un équipement porteur pour au moins une carrosserie de véhicule à convoyer sur l'équipement porteur ;
b) deux voies parallèles (7, 8 ; 107, 108 ; 207, 208 ; 307, 308 ; 407, 408) s'étendant le long d'un parcours de transport, sur lesquelles s'appuie l'équipement porteur ;
c) un équipement d'entraînement pour l'équipement porteur, avec lequel ce dernier peut être déplacé le long des voies (7, 8 ; 107, 108 ; 207, 208 ; 307, 308 ; 407, 408) et qui présente un entraînement linéaire (14) qui comprend lui-même:
ca) une pluralité d'éléments primaires (15) pouvant être alimentés en courant électrique, disposés stationnairement le long du parcours de transport ;
cb) un élément secondaire (16) sur chaque équipement porteur, qui se trouve en interaction avec l'élément primaire (15) respectivement voisin ;
sachant que
cc) la longueur de l'élément secondaire (16) dans la direction de transport est adaptée à la distance entre les éléments primaires (15) de telle sorte qu'au moins un élément primaire (15) est toujours disposé au voisinage immédiat de l'élément secondaire (16),
**caractérisé en ce que**
d) l'équipement porteur est un skid ou convoyeur à patins (1 ; 101 ; 201 ; 301) qui présente deux patins parallèles (2, 3 ; 102, 103 ; 202, 203 ; 302, 303) et une structure porteuse (4 ; 104 ; 204 ; 304), reliant entre eux les patins de skid ou de convoyeur (2, 3 ; 102, 103 ; 202, 203 ; 302, 303), pour au moins une carrosserie de véhicule à convoyer sur le skid ou convoyeur à patins (1 ; 101 ; 201 ; 301) ;
e) les patins (2, 3 ; 102, 103 ; 202, 203 ; 302, 303) du skid ou convoyeur à patins (1 ; 101 ; 201 ; 301) s'appuient sur les voies parallèles (7, 8 ; 107, 108 ; 207, 208 ; 307, 308 ; 407, 408), et
f) chaque élément primaire (15 ; 115 ; 215 ; 315) est pressé à l'aide d'un moyen de ressort (18; 118 ; 218 ; 318) en direction de l'élément secondaire du skid ou convoyeur à patins (1 ; 101 ; 201 ; 301) précisément voisin.

2. Dispositif de convoyage selon la revendication 1, **caractérisé en ce que** chaque élément primaire (15 ; 115 ; 215 ; 315) présente un moyen (19 ; 119 : 219 ; 319) qui garantit un interstice constant, de petite taille, entre les surfaces voisines de l'élément primaire (15 ; 115 ; 215 ; 315) et de l'élément secondaire respectivement voisin (16 ; 116; 216 ; 316).

3. Dispositif de convoyage selon la revendication 1, **caractérisé en ce que** ledit moyen comprend au moins un galet d'espacement (19 ; 119; 219 ; 319) qui est monté sur l'élément primaire (15 ; 115 ; 215 ; 315) et qui roule sur un élément (16 ; 116; 216; 316) relié au skid (1 ; 101 ; 201 ; 301), de préférence sur l'élément secondaire.

4. Dispositif de convoyage selon l'une des revendications précédentes, **caractérisé en ce que** l'entraînement linéaire (14) est disposé entre les deux voies (7, 8) sur lesquelles s'appuient les deux patins de skid (2, 3).

5. Dispositif de convoyage selon l'une des revendications 1 à 3, **caractérisé en ce que** l'entraînement linéaire (114 ; 214 ; 314) est disposé dans la région d'une (107 ; 207 ; 307) des deux voies (107, 108 ; 207, 208 ; 307, 308; 407, 408) sur lesquelles s'appuient les patins de skid (102, 103 ; 202, 203 ; 302, 303), et **en ce que**, à cet effet, l'élément secondaire (116; 216 ; 316) du skid au moins unique (101 ; 201 ; 301) est disposé sur au moins un (102 ; 202 ; 302) des deux patins de skid (102, 103 ; 202, 203 ; 302, 303).

6. Dispositif de convoyage selon la revendication 5, **caractérisé en ce que** les éléments primaires (115 ; 215) sont intégrés dans au moins une (107 ; 207) des deux voies (107, 108 ; 207,208).

7. Dispositif de convoyage selon la revendication 6, **caractérisé en ce que** les éléments primaires (115) et l'élément secondaire au moins unique (116) sont réalisés sous forme de profilés complémentaires, s'étendant en voisinage mutuel.

8. Dispositif de convoyage selon la revendication 6, **caractérisé en ce que** les surfaces en vis-à-vis des éléments primaires (215) et de l'élément secondaire au moins unique (216) sont planes.

9. Dispositif de convoyage selon la revendication 5, **caractérisé en ce que** l'élément secondaire (316) du skid au moins unique (301) est disposé sur une face latérale d'un patin de skid (302), et les éléments primaires (315) roulent latéralement sur l'élément secondaire (316).

10. Dispositif de convoyage selon l'une des revendications précédentes, **caractérisé en ce que** les voies (7, 8 ; 107, 108 ; 207, 208 ; 307, 308 ; 407, 408) sur lesquelles s'appuient les patins de skid (2, 3 ; 102, 103 ; 202, 203 ; 302, 303) sont des rails à rouleaux qui présentent respectivement une pluralité de rouleaux porteurs librement rotatifs (11, 12 ; 111, 112 ; 211, 212 ; 311, 312).

11. Dispositif de convoyage selon la revendication 10, **caractérisé en ce que** les distances entre les rouleaux porteurs (11, 12 ; 111, 112 ; 211, 212 ; 311, 312) sont adaptées à la longueur des patins de skid (2, 3 ; 102, 103 ; 202, 203 ; 302, 303) de telle sorte que chaque patin de skid (2, 3 ; 102, 103 ; 202, 203 ; 302, 303) est à tout moment en contact avec au moins trois rouleaux porteurs (11, 12 ; 111, 112 ; 211, 212 ; 311,312).

12. Dispositif de convoyage selon la revendication 10 ou 11, **caractérisé en ce que** les éléments primaires (115 ; 215) sont insérés dans le rail à rouleaux (107, 108 ; 207, 208) entre les rouleaux porteurs (111, 112 ; 211, 212).

13. Dispositif de convoyage selon l'une des revendications 1 à 9, **caractérisé en ce que** les patins s'appuient sans contact sur les voies.

14. Dispositif de convoyage selon la revendication 13, **caractérisé en ce que** les patins s'appuient sur les voies par l'intermédiaire d'un coussin d'air.

15. Dispositif de convoyage selon la revendication 13, **caractérisé en ce que** les patins s'appuient sur les voies par l'intermédiaire d'un champ magnétique.

16. Utilisation d'un dispositif de convoyage selon l'une des revendications 1 à 15 pour le transport de carrosseries de véhicules à travers un sécheur.

17. Utilisation selon la revendication 16, dans le cas de laquelle les éléments primaires (415) de l'entraînement linéaire (414) sont refroidis.
